# EUROPEAN PATENT SPECIFICATION

(11) **EP 3 347 214 B1**
(45) Date of publication and mention of the grant of the patent: **29.01.2020**
(21) Application number: 16762837.9
(22) Date of filing: 31.08.2016
(51) Int. Cl.: B60D 1/155, B62D 13/02

(54) **IMPROVED TRAILER COUPLING**
VERBESSERTE ANHÄNGERKUPPLUNG
DISPOSITIF D'ATTELAGE DE REMORQUE AMÉLIORÉ

(30) Priority: 11.09.2015 GB 201516135
(43) Date of publication of application: 18.07.2018
(73) Proprietor: Haslam, James Henry, Preston, Lancashire PR2 9AZ (GB)
(72) Inventor: Haslam, James Henry, Preston, Lancashire PR2 9AZ (GB)
(74) Representative: Appleyard Lees IP LLP
(86) International application number: PCT/GB2016/052686
(87) International publication number: WO 2017/042538

(56) References cited:
- EP-A1- 1 539 561
- DE-A1- 3 910 311
- FR-A1- 2 533 172

## Description

### FIELD

The invention relates to a trailer coupling apparatus, particularly, although not exclusively suitable for trailers having multiple axles.

### BACKGROUND

It is known to provide trailer couplings pivotally connected between a towing vehicle and trailer. DE 39 10 311 A1 discloses a trailer coupling apparatus according to the preamble of claim 1.

As shown in Figure 1 of the present disclosure, EP-A-1539561 discloses a trailer coupling 2 for coupling a trailer 3 and a towing vehicle 5. The trailer 3 includes front and rear wheels 4,34 mounted about a chassis 38 and interconnected by axles 6,36. The front wheels 4 are steerable and turn with movement of a turntable 10 that pivots about an axis 10. A towing pivot (pivotable about an aperture 14) and steering pivot 24 (pivotably slidable about a channel 26) are longitudinally spaced apart from one another by an offset D. The towing pivot and steering pivot 24 are arranged at the apex of A-frames made up of hinges 18,22 and adjoining bars 12,20. The A-frame 12,18 of the towing pivot is hingedly connected to the chassis 38 of the trailer 3 and is rotatably fixed in plan view, whereas the A-frame 20,22 of the steering pivot 24 is connected to the turntable 10 via a steering frame 21, such that the A-frame 20,22 of the steering pivot 24 is rotatable in plan view.

When the towing vehicle 5 turns (in a reverse or forward direction), the offset D between the towing and steering pivots varies in order to vary the angular difference between the towing vehicle 5 and trailer 3 (i.e. the pivoting angle) and provide a more gradual turning motion. The linear movement is achieved by the single, linear slide channel 26 mounted to the chassis 30 of the towing vehicle 5 that receives the steering pivot 24 and allows the steering pivot 24 to rotate about the slide channel 26 and slide back and forth along the slide channel 26. However, the extent of the linear movement is governed by the finite length of the linear slide channel 26, as shown by the closed end 28. In use, this length is used to prevent over-pivoting (i.e. folding or 'jack-knifing') by setting a safe, predetermined maximum pivoting angle. However, in reality, the linear extent is governed by the proximity of the rear axle 32, particularly when a rear differential is present. If greater pivoting angles are required, the steering pivot 24 may be disconnected from the chassis 30. However, this is inconvenient and more importantly, will not prevent over-pivoting.

It is an aim of the preferred embodiments of the present invention to attempt to overcome at least one of the above or other identified problems. An improved trailer coupling is needed. For example, a trailer coupling that allows greater pivoting angles to be conveniently achieved is desirable. Additionally, a trailer coupling that contributes to fuel savings is desirable.

### SUMMARY

According to the present invention there is provided an apparatus as set forth in the appended claims. Other features of the invention will be apparent from the dependent claims, and the description which follows.

According to the present invention there is provided an apparatus for coupling a trailer and a towing vehicle. The suitable trailer is provided with wheel steering means that are configured to provide pivotal movement of the wheels with respect to the chassis of the trailer. The apparatus comprises a bifurcated guide that is configured to be mounted to the towing vehicle. That is, the bifurcated guide may be detachable such that the bifurcated guide can be assembled and disassembled to the chassis of the towing vehicle. Advantageously, the splitting or forking (i.e. the bifurcation) of the bifurcated guide allows the guide to be placed in close proximity to the rear axle of the towing vehicle, for example to avoid contact with a rear differential. The bifurcated guide therefore provides a more compact arrangement. The apparatus is also provided with a first and second pivot means. The first pivot means pivotably interconnects the towing vehicle and trailer. The second pivot means pivotably interconnects the wheel steering means of the trailer and the bifurcated guide. In addition, the second pivot means comprises a slidable pivot that is adapted to be guided by the bifurcated guide as the towing vehicle turns with respect to the trailer. That is, the slidable pivot is engageable with the bifurcated guide and capable of both pivoting and sliding movement. The slidable pivot is configured to move along the guide towards the cab of the towing vehicle. During such sliding movement, the slidable pivot can also rotate or pivot about the guide. Advantageously, the path of movement depends on the route taken down the bifurcated guide. This allows the extent of movement to not be hindered or limited by the rear axle. The bifurcated guide can be placed closer to the rear axle when a rear differential is present because tips of ends of the bifurcated guide can pass to the side of the rear differential.

According to to the present invention the bifurcated guide comprises a main channel and two branched channels each in communication with a junction and extending away from the junction. A plurality of branched channels may be provided. For example, three branched channels may be provided to produce a three-way split. In either case, the main channel may be substantially aligned with the longitudinal axis of the towing vehicle and the branched channels may diverge away from the longitudinal axis, such that when the towing vehicle increasingly turns in use, the slidable pivot is guided along the main channel and into one of the branched channels via the junction. Advantageously, during greater turns, the angle between a centre line of the steering means and the bifurcated guide in contact with the slidable pivot may be decreased to favourably reduce the frictional forces between the bifurcated guide and the slidable pivot and allows the slidable pivot to be urged along the guide more easily. The provision of a junction allows direct transitioning of the slidable pivot from the main channel to one of the two branched channels. The branched channel that is opposite the side that the centre line of the steering means (or steering line) moves to along when approaching the junction, is the branched channel that is selected automatically, i.e. without manual intervention. In the case of three branched channels, one channel may be provided as an extension to the main channel and may be substantially aligned with the main channel. A blocking device may be used to close off access at the junction to at least one of the branched channels in order to restrict the number of paths along which the slidable pivot can follow. This helps to provide greater user flexibility and the option to vary the relative turning motion of the towing vehicle and trailer.

The line connecting the centre of the pivot point of the first pivot means and the centre of the slidable pivot of the second pivot means is not parallel to the main channel axis or the longitudinal axis of the chassis of the towing vehicle when the slidable pivot engages one of the two branched channels. Therefore, when viewed in plan view, the path that the steering pivot follows is not collinear (i.e. not coaxially aligned) with the main channel or the chassis of the towing vehicle.

The bifurcated guide of any embodiment may be substantially Y-shaped. Alternatively, or additionally, the bifurcated guide may be symmetrical about the main channel. However, if greater turning angles are required on one side, the respective branched channel may be longer than the other. Each branched channel may not be parallel to or coaxially aligned with the main channel. This allows the branched channels to be angled with respect to the main channel when viewed in plan view such that tighter turning of the towing vehicle and trailer is provided.

The longitudinal extent of the main channel may be between 50% and 80% of the overall longitudinal extent of the bifurcated guide. Additionally, or alternatively, the path length of each branched channel may be at least 20% of the path length of the main channel. The path length of each of the main channel and the branched channels may be substantially equal. Preferably, the overall width (i.e. the span between the tips of the branched channels) is at least 80% of the overall length. This allows for a bifurcated guide which may be longer than it is wide. The path length along a branched channel may be substantially equal to the path length along the main channel despite more than half of the overall longitudinal extent of the bifurcated guide being taken up by the main channel. The angle between the two branched channels (i.e. the bifurcation angle) may be constant or may vary along the longitudinal extent of the bifurcated channel. For example, the bifurcation angle may be substantially 90 degrees.

The bifurcated guide causes a non-proportional steering movement. That is, when the towing vehicle and trailer are configured to turn with respect to each other, the pivoting movement (i.e. the angular change) of the steerable trailer wheels is not proportional to the pivoting motion of the towing vehicle. This helps to minimise the forward movement when the towing vehicle is turned more greatly with respect to the trailer. When the towing vehicle turns, the junction of the bifurcated guide may be reached when the towing vehicle is at a predetermined angle relative to the trailer. This predetermined angle may be substantially 40 degrees. Similarly, the maximum angle of offset between the centreline of the steering means and the corresponding tangent of the bifurcated guide at the point of contact is between 40 and 60 degrees.

Preferably, each branched channel comprises a plurality of sections angled with respect to each other and/or the main channel. One of the plurality of sections may be arcuate and may curve away from the main channel. The arcuate section may be adjacent the junction or may be adjacent an intermediate section, the intermediate section interposed between the arcuate section and the junction. Advantageously, the fictional forces between the slidable pivot and the bifurcated guide are minimised.

The bifurcated guide may have a constant cross section. The cross-section may be substantially square-shaped or circular-shaped. Alternatively, the main channel and branched channel may comprise of substantially different cross-sectional profiles. The bifurcated guide may be a tubular member having a slot. The slot may be arranged to receive a member interconnecting the slidable means with the steerable wheels of the trailer such that the interconnecting member slides along the slot. Each branched channel may comprise an end stop to restrict the movement of the slidable pivot. The end stop may be arranged at the tip of each branched channel. The end stop may be adjustable in use such that the position of the end stop relative to the junction is variable.

According to another embodiment, the apparatus may comprise a routing means configured to direct or align the slidable pivot into a predetermined branched channel when the slidable pivot is guided from the main channel into the branched channel via the junction. This helps to positively locate the slidable pivot in the correct branched channel. The routing means may comprise a first and second abutment portion engageable with one another. The first abutment portion may be part of the second pivot means and the second abutment portion may be part of the bifurcated guide. The first abutment portion may be configured ahead of the slidable pivot such that the first abutment portion moves with the slidable pivot and guides the slidable pivot from the main channel into one of the branched channels by engagement between the first abutment portion and the second abutment portion. The first and second abutment portions may be configured outside of the channels of the bifurcated guide or the first and second abutment portions may be configured within the channels of the bifurcated guide. In the former case, the second abutment portion may be an angle protrusion that extends away from the bifurcated guide at the junction. In the latter case, the slidable pivot may have a substantially curved outer surface and the first abutment portion may be attached to and extend radially from the outer surface. Therefore, the first abutment portion is provided integrally to the slidable pivot. When the slidable pivot and first abutment portion are provided within the bifurcated guide, the internal walls of the guide may taper to allow greater pivoting movement.

### BRIEF DESCRIPTION OF DRAWINGS

For a better understanding of the invention, and to show how embodiments of the same may be carried into effect, reference will now be made, by way of example, to the accompanying diagrammatic drawings (like features having like reference numerals) in which:
Figure 1 shows an example of a known trailer coupling apparatus in plan view, the apparatus having a single, linear slide channel;
Figures 2a and 2b show a first embodiment of a trailer coupling apparatus having bifurcated slide channel in plan and side view, respectively;
Figures 3a and 3b show the bifurcated slide channel of the first embodiment in plan and side view, respectively;
Figures 3c and 3d show cross-sections of the divergent and linear portions of the bifurcated slide channel of the first embodiment, respectively;
Figure 4 shows a second embodiment of the bifurcated slide channel in plan view;
Figure 5 shows a third embodiment of the bifurcated slide channel in plan view;
Figures 6a to 6c show schematic plan views of the trailer and towing vehicle using the apparatus of the invention;
Figure 6d shows a schematic plan view comparison between Figure 2C of EP-A-1539561 (on the left) and Figure 6c of the current disclosure (on the right);
Figures 7a and 7b show a first embodiment of a channel directing means in plan and side view, respectively; and
Figures 8a and 8b show a second embodiment of a channel directing means in plan and side view, respectively.
Figure 9 shows a further embodiment of a steering bar.

### DESCRIPTION OF EMBODIMENTS

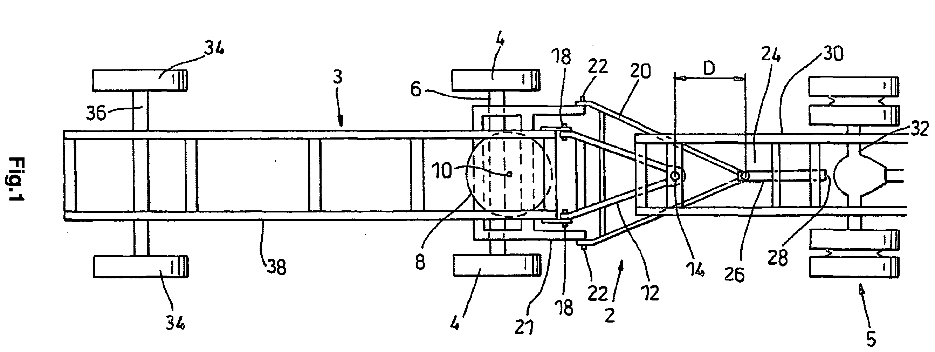

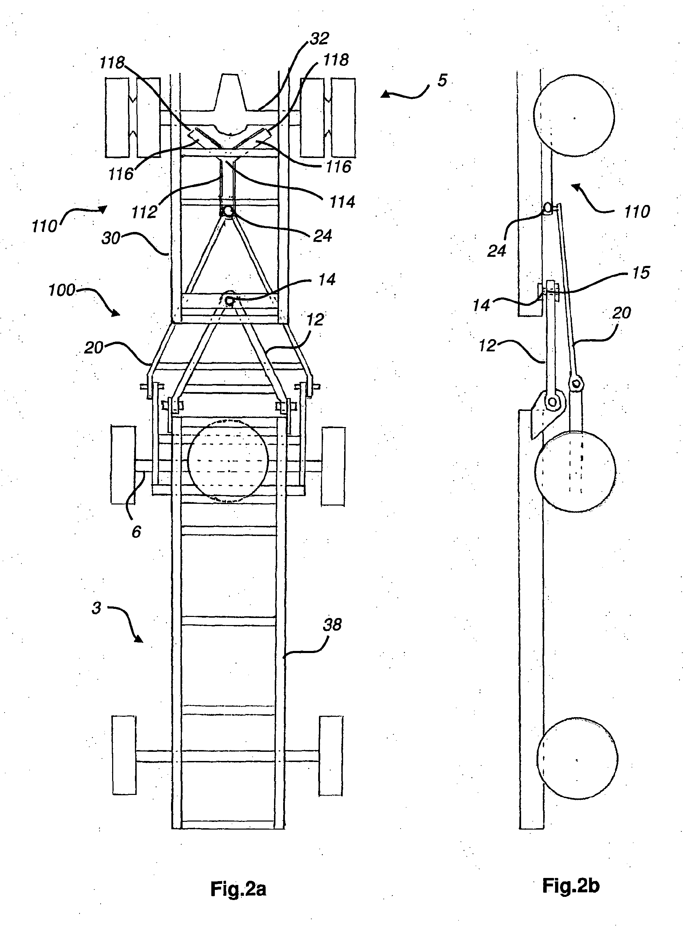

Referring to Figures 2a and 2b, an improved trailer coupling apparatus 2 is shown. The present apparatus is an improvement over that described in EP-A-1539561 shown in Figure 1 of the accompanying drawings. The elements in Figure 1 that are in common with the parent apparatus will not be described again. The apparatus 100 of this disclosure differs from the known apparatus of Figure 1 in that a bifurcated channel 110 is provided.

In plan view, the bifurcated channel 110 is substantially Y-shaped and comprises a main channel 112 and two branched channels 116 separated by a junction 114. The bifurcated channel 110 is arranged towards the rear of the towing vehicle 5 behind the rear axle 32. The bifurcated channel 110 is attached to the chassis 30 of the towing vehicle 5 so that the bifurcated channel 110 is held fast and rigidly fixed to the chassis in use. In plan view, the main channel 112 is arranged substantially parallel to the chassis 30 of the towing vehicle 5. The branched channels 116 progressively extend away from the main channel 112 at the junction 114 in order to extend the channel away from any obstructions such as the rear axle 32 of the towing vehicle 5, or the rear differential. Therefore, when arranged on the chassis 30 of the towing vehicle 5, the rear differential may be received between the tips of the branched channels 116 and towards the junction 114. The splitting of the bifurcated channel 110 in proximity to the rear axle 32 allows for either a greater sliding path length compared to the sliding path length of a single, linear channel (see reference 24 in Figure 1) or a substantially equivalent sliding path but with a more compact size (i.e. longitudinal foot print).

Similarly, to the known coupling apparatus, the trailer 3 and the towing vehicle 5 are pivotably coupled by a steering pivot 24 and a towing pivot 15. The towing pivot 15, which is interconnected to the chassis 38 of the trailer 3 by a tow bar 12 is a pivot member, such as a pin 15 that rotates about the aperture 14 but the aperture 14 and pin 15 do not move along the length of the apparatus 100. In contrast, the steering pivot 24, which is interconnected to the steerable axle 6 by a steering bar 20, is a further pivot member, such as a connection ball 24 that is slidably engageable with the bifurcated channel 110. As shown in Figure 2b, the connection ball 24 engages the bifurcated channel 110 from the underside of the bifurcated channel 110, in a similar manner as that described in EP-A-1539561. The connection ball is configured to slide along the channel in order to provide differential turning of the steerable axles 6. The extent of movement of the connection ball 24 along each path is limited by an end stop 118 located towards the end of each branched channel 116 and away from the junction 114. The restrained by each end stop 118 means that the angular difference between the chassis 30 of the towing vehicle 5 and the chassis 38 of the trailer 3 is limited.

As the towing vehicle 5 turns and the angular difference between the towing vehicle 5 and trailer 3 varies about the towing pivot 15, the engagable connection between the connection ball 24 and bifurcated channel 110 causes the connection ball 24 to move along the bifurcated channel 110. Whilst moving along the bifurcated channel 110, the resultant force exerted by the connection ball 24 on the bifurcated channel 110 may be biased to one side of the bifurcated channel 110 towards one of the branched channels 116. Through continued turning, the connection ball 24 arrives at the junction 114 and enters one of the branched channels 116, which may be the channel at the same side as the resultant force.

Selection of the branched channel 116 is determined by the branched channel 116 with a line of entry more closely aligned with the line perpendicular to the steerable axle 6 of the trailer 3 and extending though the centre of the connection ball 24 (i.e. the steering line SL). The selection is automatic and does not require manual intervention or a separate step of manoeuvring the connection ball 24 because entry into the wrong branched channel 116 is prevented by the structural relationship between the coupling apparatus 100, towing vehicle 5 and trailer 3. For example, the rigid connection between the bifurcated channel 110 and the chassis 30 as well as the rigid connections about the pivotable connections limit the number of possible directions of sliding movement. Each branched channel 116 has a path which the connection ball 24 will follow. The line of entry is a line tangential to the starting point of the path located between the junction 114 and the branched channel 116. In use, the transition between the main channel 112 and either of the branched channels 116 is therefore substantially uninterrupted because of the close alignment of the steering line and entry line at the point of entry. This helps to minimise unwanted forces, such as frictional forces, and allows the towing vehicle 5 and trailer 3 to turn smoothly without jolting. The smallest angle between the steering line and the tangential line of the channel at the point of contact of the connection ball is less than 60°. However, preferably, the angular difference does not exceed 45°.

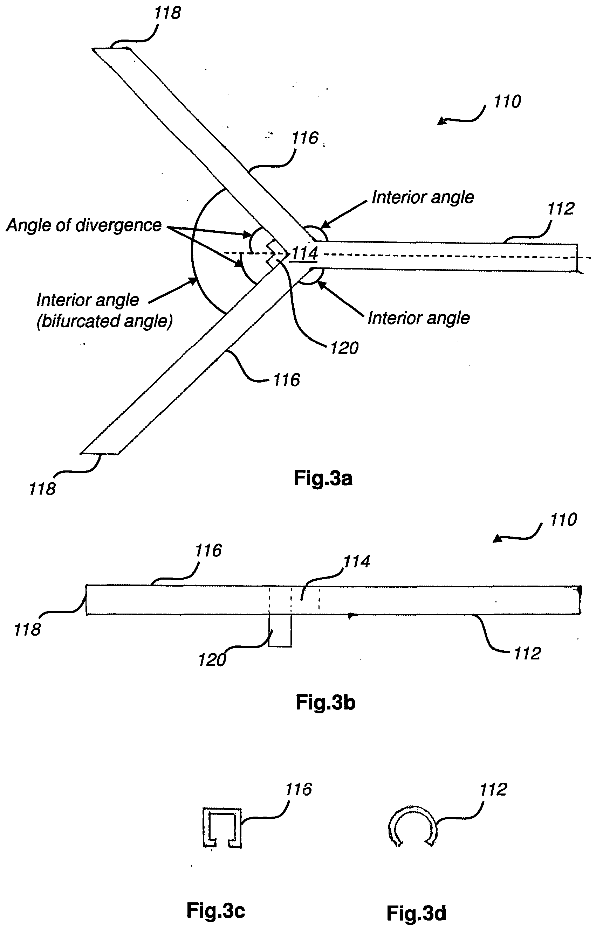

Figures 3a to 3d show a first embodiment of a bifurcated channel 110 suitable for use with the coupling apparatus 100. The length of the main channel 112 and each of the branched channels 116 is shown to be substantially equal, although different arrangements are possible. Each channel 112,116 extends away from the junction 114 in a linear manner, when viewed in plan view (see Figure 3a). The angle between adjacent channels is herein called an interior angle. The angle between each branched channel 116 and the tangent of the main channel extending forwards from the junction 114 is called the angle of divergence. Therefore, in the example shown, the interior angle between the two branched channels 116 is smaller than the interior angle between the main channel 112 and each adjacent branched channel 116. As shown in Figure 3a, the two branched channels 116 are separated by an interior angle of approximately 90 degrees. This is the bifurcation angle. As the bifurcated channel 110 is symmetrical in plan view, each branched channel 116 therefore has an angle of divergence which is half the interior angle between them, i.e. approximately 45 degrees.

Two possible paths are shown along the bifurcated channel 110. Each path is shown with the same length because the bifurcated channel 110 is symmetrical when viewed in plan view. However, asymmetrical branched channels 116 may be used, for example when greater turning angles are anticipated on one side rather the other. The path length of the branched channels 116 is shown to be substantially equal to the main channel 112 despite the length of the branched channels occupying only around 40% of the total linear length of the bifurcated channel 110. The branching therefore allows for a more compact channel to be provided because the sideways availability of space is utilised. The overall footprint of the bifurcated channel 110 is longer than it is wide. However, the overall width (i.e. the span between the tips of the branched channels 116) is around 80% of the overall length.

In order to encourage entry of the connection ball 24 into the correct branched channel 116, an angled projection 120 is provided. This angle projection 120 extends away from the bifurcated channel 110 at the rear of the junction 114 on the branched channel 116 side. The angled projection 120 helps to positively direct the connection ball 24 toward the predetermined branched channel 116 when the connection ball 24 slides towards the junction 114. As shown in Figure 3b, the angled projection 120 extends downwards from the bifurcated channel 110 when attached to the chassis 30 of the towing vehicle 5.

Figures 3c and 3d show the type of cross-sectional shapes suitable for the bifurcated channel 110. In either case, the channel is open-looped in that two ends define a gap provided there between. This gap allows the connection ball 24 to be connected with the apex of a rigid steering bar 20, whilst preventing the connection ball 24 to pass out of the channel 110. It is possible that either cross-sectional type can be used for the entire bifurcated channel 110 or different cross-sectional types could be used for different channels. As long as the channel and gap are suitably sized to retain the connection ball 24 whilst allowing a projection from the connection ball 24 to pass through the gap, the cross-section can be of any type and the channel is not limited thereto. For example, a substantially square cross-section may be used for the branched channels 116, whereas a circular cross-section may be used in the main channel 112.

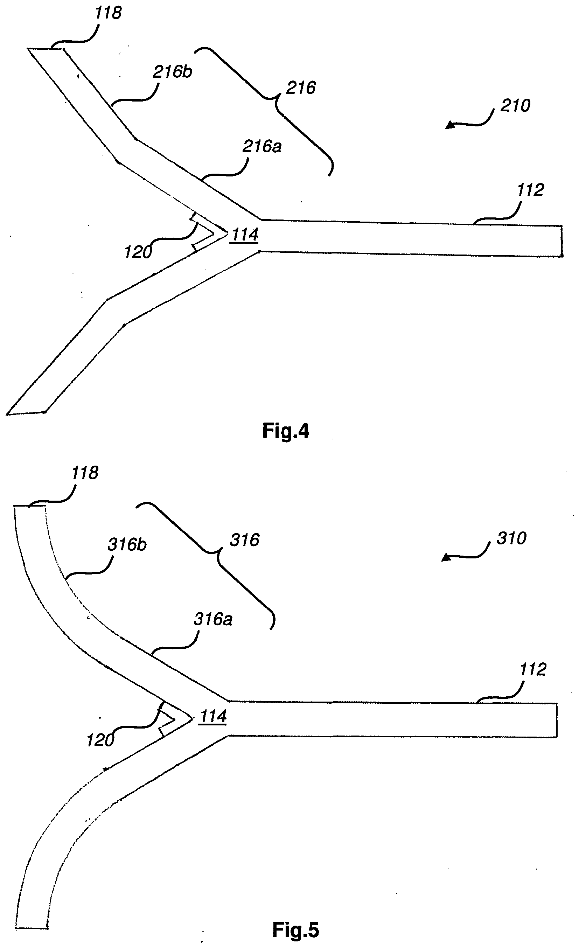

Figures 4 and 5 show a second and third embodiment of the bifurcated channel 210,310 respectively. Both of these examples comprise linear main channels 112 but have branched channels 216,316 shaped differently to the branched channels 116 of the first embodiment.

The branched channels 216 of the second embodiment of the bifurcated channel 210 are made up of an inner 216a and outer 216b branched channel. The inner branched channel 216a, adjacent the junction 114, is shown with a lower angle of divergence than the outer branched channel 216b. The increased angle of divergence away from the junction helps to lower the frictional forces between the connection ball 24 and bifurcated channel 210 by keeping the angle between the steering line SL and the channel low (i.e. below 45 degrees). The inner 216a and outer 216b branched channels have an angular difference similar to the interior angle between the inner branched channel 216a and the main channel 112. This angle is less than 30 degrees in order to enable smooth transitioning between sections.

The third embodiment of the bifurcated channel 310, shows a similarly arranged inner branched channel 316a to the second embodiment. However, the outer branched channel 316b is arcuate with a fixed radius of curvature. The arcuate portion goes through an 1/8^{th} of a full turn, or approximately 45 degrees. Therefore the tangent of the path in proximity of the end stop 118, is approximately orthogonal to the tangential line of the main channel 112. Although the curvature results in a wider overall footprint the overall length of the bifurcated channel 310 is reduced.

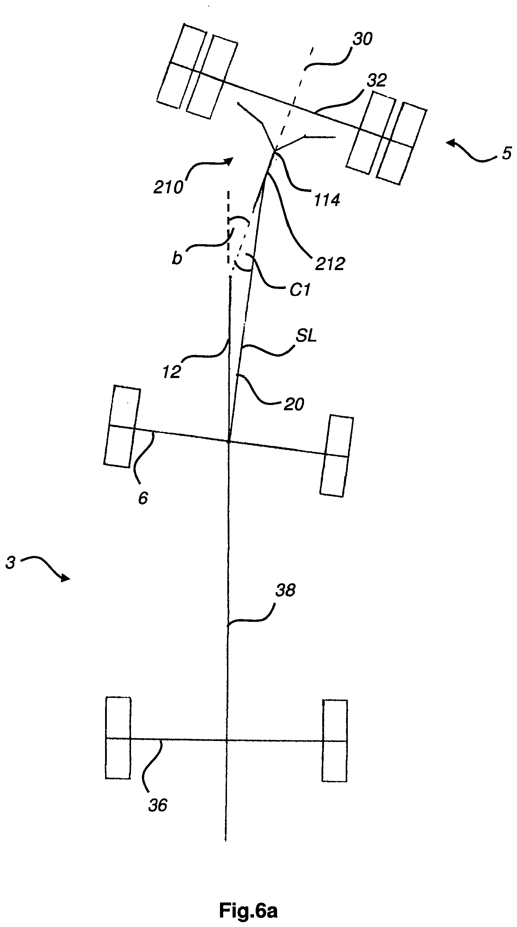

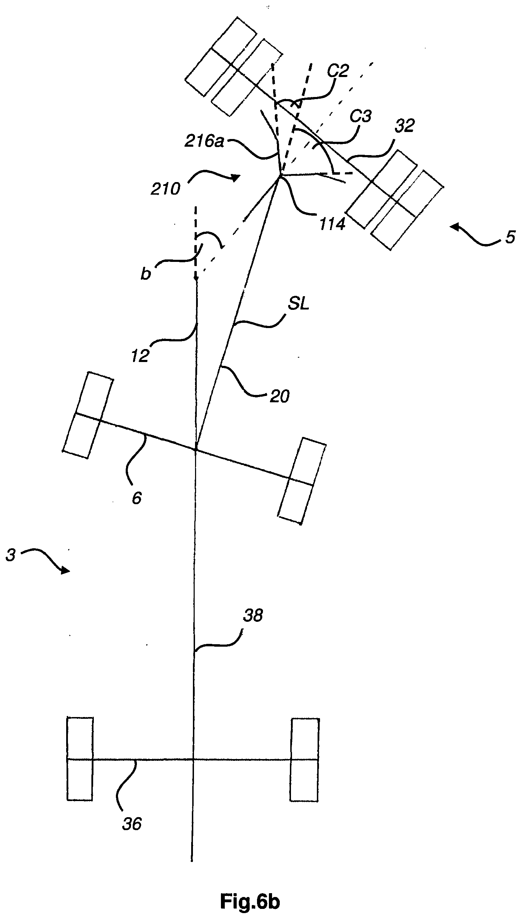

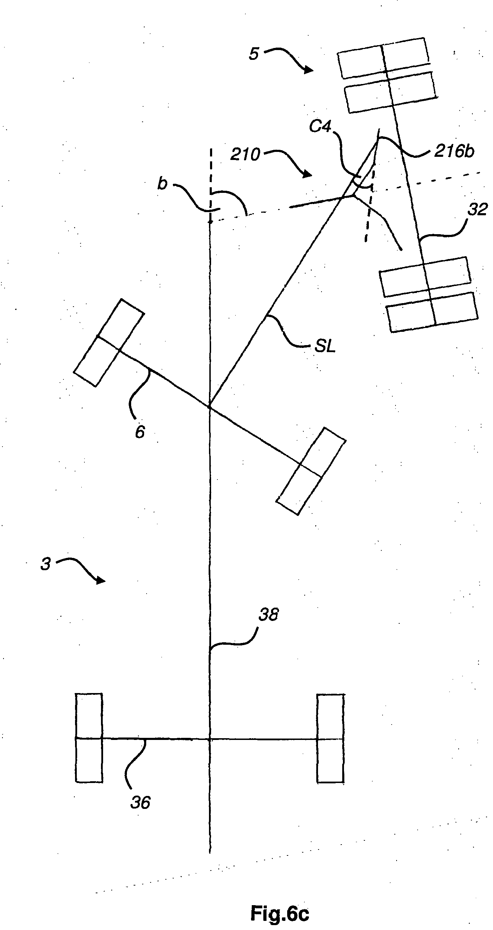

As known from the apparatus of Figure 1, the guiding means is used to allow differential pivoting of the trailer wheels and trailer 10 as the towing vehicle 20 is turned in use. The effect on the differential pivoting of the bifurcated channel 210 of the second embodiment is demonstrated in Figures 6a to 6c. In this example, the towing vehicle 5 turns toward the right. The further the towing vehicle 5 turns, the greater the angle b between the towing line 12 and the chassis 30. The angle C1 between the steering line SL and the chassis line 30 increases as the connection ball 24 moves along the main channel 212 towards the junction 114. This movement is similar to that described in relation to Figures 2A to 2C of EP-A-1539561. As the connection ball 24 moves towards the junction 114, the angle C2 between the steering line SL and the inner branched channel 216a decreases, whereas the angle C3 increases. Therefore, with continued turning of the towing vehicle 5 towards the right, the connection ball 24 automatically enters the left branched channel 216 and follows the path towards the left end stop 118. Therefore, when moving forward, the side that the towing vehicle 5 turns opposes the side of the branched channel 216 entered. As the connection ball 24 slides along the inner branched channel 216a, the degree of angular movement of the trailer chassis 12 may decrease as the towing vehicle 5 continues to turn at a constant rate. Furthermore, the effect of the branched channels 216 is to bring the towing vehicle 5 closer to the trailer 3. As the connection ball 24 slides along the upper branched channel 216b, angle C4 between the steering line SL and a tangent of contact of the branched channel 216b is low, much the same as the angles C1 and C2 are kept low. This helps to reduce frictional losses so that the connection ball 24 slides freely.

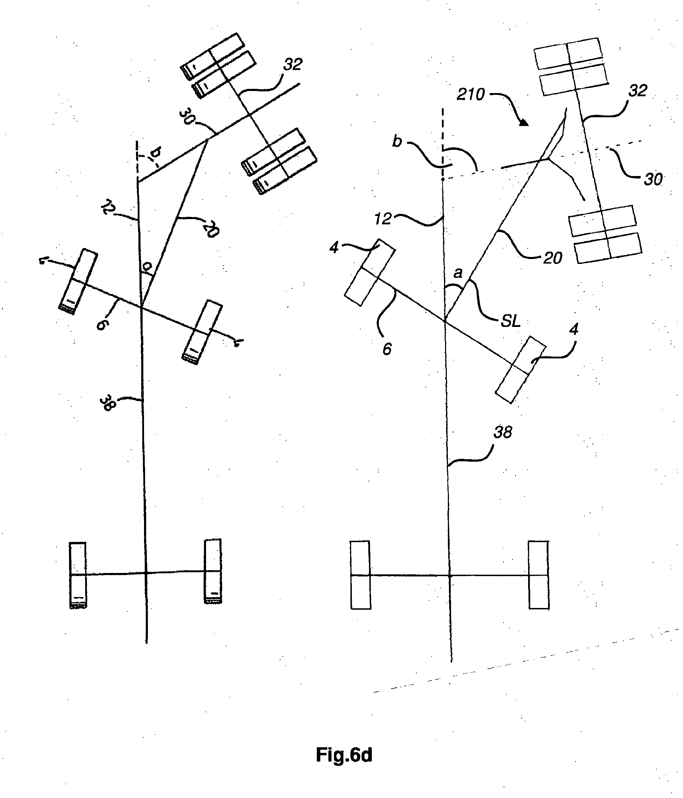

Figure 6d directly compares the known coupling apparatus of EP-A-1539561 with the coupling apparatus of the current disclosure at the same angle a, in order to highlight the benefits of the bifurcated channel 210. For approximately the same lateral extent of the rear axle 32 of the towing vehicle 5, the angle of turn b, is much greater for a bifurcated channel 210 arrangement than for a linear channel arrangement. The coupling apparatus of the present disclosure therefore allows the towing arrangement to become more compact during tight turns, whilst the end stop 118 still prevents the risk of over-pivoting.

In order to aid the alignment of the connection ball 24 into the correct branched channel 116 and to reduce the vulnerability to sudden movement of the trailer or towing vehicle causing the connection ball to enter the wrong channel, an abutment nose 52 is provided.

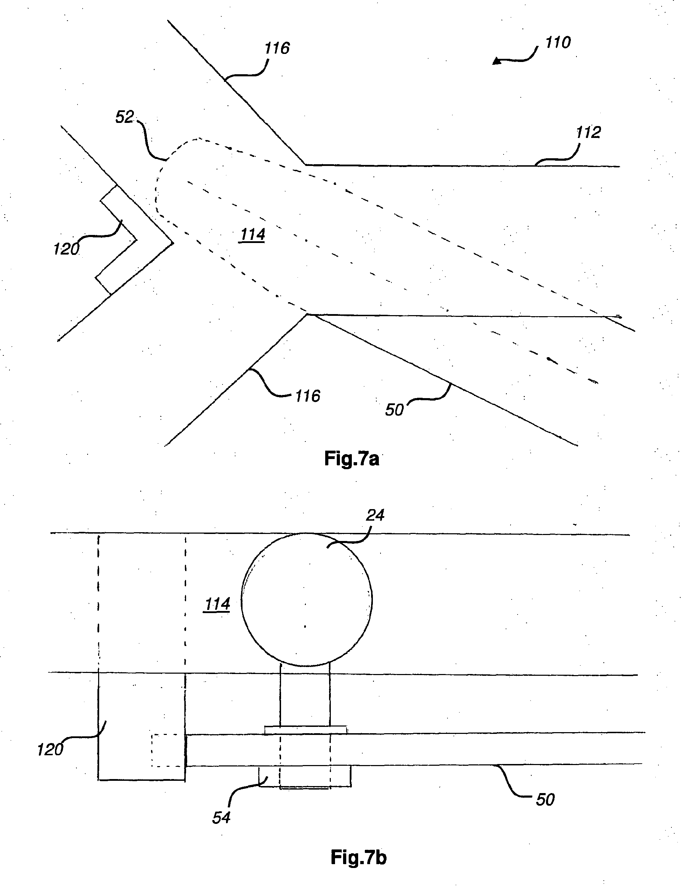

The first embodiment of the abutment nose 52 is shown in Figures 7a and 7b. Here, a routing arm 50 is provided having an abutment nose 52 disposed at the tip of the arm 50. As the connection ball 24 slides along the main channel 112 and is urged into the junction 114, the abutment nose 52 abuts a side wall of the angled wall 120 upstanding from the bifurcated channel 110 in order to direct the connection ball 24 into the correct branched channel 116. The abutment nose 52 is arranged outside of the bifurcated channel 110 and so the extension of the abutment nose 52 from the connection ball 24 is not governed by the internal dimensions of the bifurcated channel 110. However, the projection from the ball 24 is related to the length of the channel 110 in that it is important the abutment nose 52 avoids direct contact with the apex of the angled wall 120. As the abutment nose 52 arrives at the junction 114, the steering line SL is angled with respect to the main channel 112. Therefore, the sides of the angled wall 120 and the abutment nose 52 will make contact and make sure the connection ball 24 enters the branched channel 116 suitable for the direction of turn. The routing arm 50 may be an integral part of the steering bar 20 or may be fastened thereto. A fastener 54 may be used to interconnect the connection ball 24, abutment nose 52 and/or the routing arm 50. This allows for ease of maintenance.

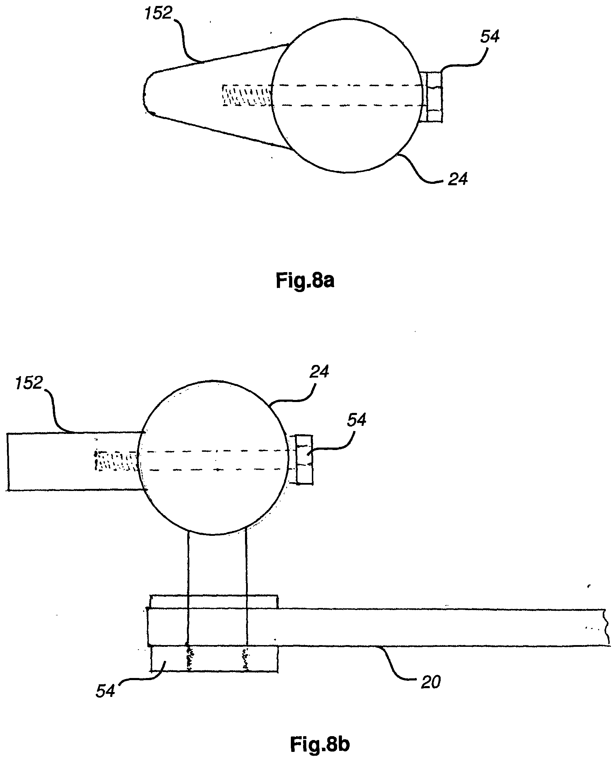

A second embodiment of the abutment nose 52 is shown in Figures 8a and 8b. Here, the abutment nose 152 is configured to be disposed within the bifurcated channel 110. In this instance, the angle wall 120 is also within the channel 110. The angle wall 120 may comprise a region of reinforcement. The abutment nose 152 in the second embodiment is wedge-shaped but may be frustoconical. Therefore, the base of the nose 152 in contact with the outer surface of the connection ball 24 is wider than the tip of the nose 152. A fastener 54 such as a bolt or screw is used to connect the connection ball 24 and nose 152 so that the two parts are unified and move together. The nose 152 may therefore have a threaded portion to receive the bolt or screw, and the head of the bolt or screw may be diametrically opposed on the connection ball 24. The extent of projection of the nose 152 from the connection ball 24 is limited by the internal width of the bifurcated channel 110. Therefore, each channel may be tapered or widened to allow the tip of the nose 152 to pivot more greatly than the diameter of the connection ball 24. Half of the angle between the lines tangentially drawn between the nose 152 and the connection ball 24 is related to the amount of pivotal movement of the connection ball 24, nose 152 combination. This pivotal movement is limited by the internal width of the channels. Therefore, in order to prevent locking, wedging or a build-up of frictional force between the ball 24, nose 152 and channel, the extension of the nose 152 should be limited accordingly. This means that the internal positioning of the nose 152 requires the careful dimensioning of the other components.

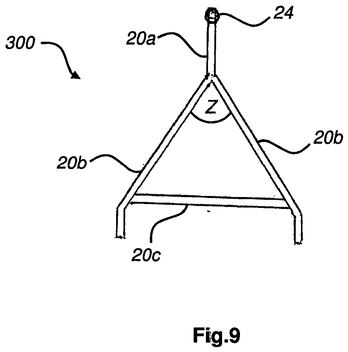

Figure 9 shows a further embodiment of a steering bar 300, different to the steering bar 20 of Figure 2a. Both steering bars 20,300 substantially form an A-frame. However, the alternative steering bar 300 comprises an extension arm 20a that extends from the apex of the A-frame to produce an inverted Y-shape. In order to provide a similar overall width and length to the steering bar 20 of Figure 2a, the alternative steering bar 300 comprises a more obtuse interior angle Z between the arms 20b that interlink the cross-member 20c. The interior angle Z may be greater than 45 degrees. In some instances, the angle may be at least 60 degrees or even at least 90 degrees. In this embodiment, the extension arm 20a is approximately a third of the overall length of the steering bar 300. However, the extension can preferably be up to substantially half of the length of the steering bar 300. Advantageously, the combination of the extension arm 20a and the increased interior angle Z allows the steering bar 300 to avoid impact with the towing vehicle 5 during greater steering angles. Furthermore, the use of an extension arm 20a contributes to a weight saving (and thus potential fuel saving) because the total length of the arms in the steering bar 300 is reduced.

Although preferred embodiment(s) of the present invention have been shown and described, it will be appreciated by those skilled in the art that changes may be made without departing from the scope of the invention as defined in the claims.

## Claims

1. An apparatus (100) for coupling a trailer (3) and a towing vehicle (5), the trailer (3) having wheel steering means (4, 34), the apparatus comprising:
a bifurcated guide (110) mountable to the towing vehicle;
a first pivot means (14) to pivotably interconnect the towing vehicle and trailer; and
a second pivot means (24) to pivotably interconnect the wheel steering means of the trailer and the bifurcated guide;
wherein the second pivot means comprises a slidable pivot (24) guidable by the bifurcated guide as the towing vehicle turns with respect to the trailer;
**characterised in that**
the bifurcated guide comprises a main channel (112) and two branched channels each in communication with and extending away from a junction (114).

2. The apparatus (100) of claim 1, wherein the main channel (112) is substantially aligned with the longitudinal axis of the towing vehicle and the branched channels (116) diverge away from the longitudinal axis, such that when the towing vehicle increasingly turns, the slidable pivot (24) is guided along the main channel and into one of the branched channels via the junction (114).

3. The apparatus (100) of claims 1 or 2, wherein each branched channel (116) comprises a plurality of sections angled with respect to each other.

4. The apparatus (100) of claim 3, wherein one of the plurality of sections is arcuate.

5. The apparatus (100) of any preceding claim, wherein the apparatus comprises a routing means (50) configured to direct the slidable pivot (24) into a particular branched channel (116) when the slidable pivot is guided from the main channel (112) into the branched channel via the junction (114).

6. The apparatus (100) of claim 5, wherein the routing means (50) comprises a first and second abutment portion (52) engagable with one another, wherein the first abutment portion is part of the second pivot means (24) and the second abutment portion is part of the bifurcated guide (110), the first abutment portion is configured ahead of the slidable pivot such that the first abutment portion is configured to move with the slidable pivot (24) and guide the slidable pivot from the main channel into one of the branched channels by engagement between the first abutment portion and the second abutment portion.

7. The apparatus (100) of claim 6, wherein the first and second abutment portions are configured outside of the channels of the bifurcated guide (110).

8. The apparatus (100) of claim 6, wherein the first and second abutment portions are configured within the channels of the bifurcated guide (110).

9. The apparatus (100) of claim 8, wherein the slidable pivot (24) has a substantially curved outer surface and the first abutment portion is attached to and extends radially from the outer surface.

10. The apparatus (100) of any preceding claim, wherein the main channel (112) and branched channel (116) comprise of substantially different cross-sectional profiles.

11. The apparatus (100) of any preceding claim, wherein the bifurcation angle is substantially 90 degrees.

12. The apparatus (100) of any preceding claim, wherein each branched channel (116) comprises an end stop (118) to restrict movement of the slidable pivot (24).

13. The apparatus (100) of any preceding claim, wherein the path length along a branched channel (116) is substantially equal to the path length along the main channel (112) despite more than half of the overall longitudinal extent of the bifurcated guide being taken up by the main channel.

## Patentansprüche

1. Vorrichtung (100) zum Koppeln eines Anhängers (3) und eines Abschleppfahrzeugs (5), wobei der Anhänger (3) Radlenkeinrichtungen (4, 34) aufweist, wobei die Vorrichtung Folgendes umfasst:
eine gegabelte Führung (110), die am Abschleppfahrzeug montierbar ist;
eine erste Schwenkeinrichtung (14), um das Abschleppfahrzeug und den Anhänger verschwenkbar miteinander zu verbinden; und
eine zweite Schwenkeinrichtung (24), um die Radlenkeinrichtung des Anhängers und die gegabelte Führung miteinander zu verbinden;
wobei die zweite Schwenkeinrichtung einen verschiebbaren Drehpunkt (24) umfasst, der durch die gegabelte Führung führbar ist, wenn sich das Abschleppfahrzeug in Bezug zum Anhänger verdreht;
**dadurch gekennzeichnet, dass**
die gegabelte Führung einen Hauptkanal (112) und zwei abgezweigte Kanäle, die jeweils mit einem Knotenpunkt (114) verbunden sind und sich davon weg erstrecken, umfasst.

2. Vorrichtung (100) nach Anspruch 1, wobei der Hauptkanal (112) im Wesentlichen mit der Längsachse des Abschleppfahrzeugs ausgerichtet ist und die abgezweigten Kanäle (116) von der Längsachse weg auseinanderlaufen, sodass, wenn sich das Abschleppfahrzeug zunehmend verdreht, der verschiebbare Drehpunkt (24) entlang des Hauptkanals und über den Knotenpunkt (114) in einen der abgezweigten Kanäle geführt wird.

3. Vorrichtung (100) nach Anspruch 1 oder 2, wobei jeder abgezweigte Kanal (116) mehrere Abschnitte umfasst, die in Bezug zueinander angewinkelt sind.

4. Vorrichtung (100) nach Anspruch 3, wobei einer der mehreren Abschnitte bogenförmig ist.

5. Vorrichtung (100) nach einem der vorstehenden Ansprüche, wobei die Vorrichtung eine Leiteinrichtung (50) umfasst, die dazu ausgelegt ist, den verschiebbaren Drehpunkt (24) in einen bestimmten abgezweigten Kanal (116) zu leiten, wenn das verschiebbare Drehgelenk über den Knotenpunkt (114) vom Hauptkanal (112) in den abgezweigten Kanal geführt wird.

6. Vorrichtung (100) nach Anspruch 5, wobei die Leiteinrichtung (50) einen ersten und zweiten Anschlagabschnitt (52) umfasst, die ineinander eingreifen können, wobei der erste Anschlagabschnitt Teil der zweiten Schwenkeinrichtung (24) ist und der zweite Anschlagabschnitt Teil der gegabelten Führung (110) ist, wobei der erste Anschlagabschnitt vor dem verschiebbaren Drehpunkt ausgelegt ist, sodass der erste Anschlagabschnitt dazu ausgelegt ist, sich mit dem verschiebbaren Drehpunkt (24) zu bewegen und das verschiebbare Drehgelenk durch Eingreifen zwischen dem ersten Anschlagabschnitt und dem zweiten Anschlagabschnitt vom Hauptkanal in einen der abgezweigten Kanäle zu führen.

7. Vorrichtung (100) nach Anspruch 6, wobei der erste und zweite Anschlagabschnitt außerhalb der Kanäle der gegabelten Führung (110) ausgelegt sind.

8. Vorrichtung (100) nach Anspruch 6, wobei der erste und zweite Anschlagabschnitt innerhalb der Kanäle der gegabelten Führung (110) ausgelegt sind.

9. Vorrichtung (100) nach Anspruch 8, wobei der verschiebbare Drehpunkt (24) eine im Wesentlichen gekrümmte Außenfläche aufweist und der erste Anschlagabschnitt an der Außenfläche befestigt ist und sich radial davon erstreckt.

10. Vorrichtung (100) nach einem der vorstehenden Ansprüche, wobei der Hauptkanal (112) und der gegabelte Kanal (116) im Wesentlichen verschiedene Querschnittsprofile aufweisen.

11. Vorrichtung (100) nach einem der vorstehenden Ansprüche, wobei der Gabelungswinkel im Wesentlichen 90 Grad beträgt.

12. Vorrichtung (100) nach einem der vorstehenden Ansprüche, wobei jeder abgezweigte Kanal (116) einen Endanschlag (118) umfasst, um die Bewegung des verschiebbaren Drehpunkts (24) einzuschränken.

13. Vorrichtung (100) nach einem der vorstehenden Ansprüche, wobei die Weglänge entlang eines gegabelten Kanals (116) im Wesentlichen gleich der Weglänge entlang des Hauptkanals (112) ist, obwohl mehr als die Hälfte der gesamten Längsausdehnung der gegabelten Führung vom Hauptkanal eingenommen wird.

## Revendications

1. Appareil (100) pour accoupler une remorque (3) et un véhicule tracteur (5), la remorque (3) ayant un moyen de guidage de roue (4, 34), l'appareil comprenant :
un guide bifurqué (110) pouvant être monté sur le véhicule tracteur ;
un premier moyen de pivot (14) prévu pour interconnecter de manière pivotante le véhicule tracteur et la remorque ; et
un deuxième moyen de pivot (24) prévu pour interconnecter de manière pivotante le moyen de guidage de roue de la remorque et le guide bifurqué ;
le deuxième moyen de pivot comprenant un pivot coulissant (24) pouvant être guidé par le guide bifurqué à mesure que le véhicule tracteur tourne par rapport à la remorque ;
**caractérisé en ce que**
le guide bifurqué comprend un canal principal (112) et deux canaux ramifiés communiquant chacun avec une jonction (114) et s'étendant à l'écart de celle-ci.

2. Appareil (100) selon la revendication 1, dans lequel le canal principal (112) est sensiblement aligné avec l'axe longitudinal du véhicule tracteur et les canaux ramifiés (116) divergent à l'écart de l'axe longitudinal de telle sorte que lorsque le véhicule tracteur tourne de plus en plus, le pivot coulissant (24) soit guidé le long du canal principal et jusque dans l'un des canaux ramifiés par le biais de la jonction (114).

3. Appareil (100) selon la revendication 1 ou 2, dans lequel chaque canal ramifié (116) comprend une pluralité de sections inclinées les unes par rapport aux autres.

4. Appareil (100) selon la revendication 3, dans lequel l'une de la pluralité de sections est arquée.

5. Appareil (100) selon l'une quelconque des revendications précédentes, l'appareil comprenant un moyen d'acheminement (50) configuré pour diriger le pivot coulissant (24) jusque dans un canal ramifié particulier (116) lorsque le pivot coulissant est guidé depuis le canal principal (112) dans le canal ramifié par le biais de la jonction (114).

6. Appareil (100) selon la revendication 5, dans lequel le moyen d'acheminement (50) comprend une première et une deuxième portion de butée (52) pouvant être mises en prise l'une avec l'autre, la première portion de butée faisant partie du deuxième moyen de pivot (24) et la deuxième portion de butée faisant partie du guide bifurqué (110), la première portion de butée étant configurée en avant du pivot coulissant de telle sorte que la première portion de butée soit configurée pour se déplacer avec le pivot coulissant (24) et pour guider le pivot coulissant depuis le canal principal jusque dans l'un des canaux ramifiés par mise en prise entre la première portion de butée et la deuxième portion de butée.

7. Appareil (100) selon la revendication 6, dans lequel la première et la deuxième portion de butée sont configurées à l'extérieur des canaux du guide bifurqué (110).

8. Appareil (100) selon la revendication 6, dans lequel la première et la deuxième portion de butée sont configurées à l'intérieur des canaux du guide bifurqué (110).

9. Appareil (100) selon la revendication 8, dans lequel le pivot coulissant (24) présente une surface extérieure sensiblement courbe et la première portion de butée est attachée à la surface extérieure et s'étend radialement depuis celle-ci.

10. Appareil (100) selon l'une quelconque des revendications précédentes, dans lequel le canal principal (112) et le canal ramifié (116) comprennent des profils en section transversale sensiblement différents.

11. Appareil (100) selon l'une quelconque des revendications précédentes, dans lequel l'angle des bifurcations est de sensiblement 90°.

12. Appareil (100) selon l'une quelconque des revendications précédentes, dans lequel chaque canal ramifié (116) comprend une butée de fin de course (118) pour limiter le mouvement du pivot coulissant (24).

13. Appareil (100) selon l'une quelconque des revendications précédentes, dans lequel la longueur de la trajectoire le long d'un canal ramifié (116) est sensiblement égale à la longueur de la trajectoire le long du canal principal (112) bien que plus de la moitié de l'étendue longitudinale totale du guide bifurqué soit occupée par le canal principal.
